# EUROPÄISCHE PATENTANMELDUNG

(11) **EP 2 223 869 A1**
(43) Veröffentlichungstag der Anmeldung: **01.09.2010**
(21) Anmeldenummer: 09002832.5
(22) Anmeldetag: 27.02.2009
(51) Int. Cl.: B65D 85/804, B65D 65/46

(54) **Maschinell lesbares, vollständig biologisch abbaubares Portionskissen für die Zubereitung von Getränken**

(71) Anmelder: Wons, Uwe, 8006 Zürich (CH)
(72) Erfinder: Wons, Uwe, 8006 Zürich (CH)

(57) **Zusammenfassung**

Die vorliegende Erfindung beschreibt ein geschlossenes, aromadichtes, sauerstoffundurchlässiges Portionskissen, das mit einer oder mehreren zu extrahierenden Substanzen gefüllt ist und zur Herstellung eines Getränkes in diversen auf dem Markt bereits existierenden Gerätetypen verwendet wird. Diese Einzelpackung ist nach Gebrauch zusammen mit dem verbleibenden Restinhalt vollständig biologisch abbaubar, da sie ausschliesslich aus kompostierbaren oder anderweitig umweltfreundlich verwertbaren Werkstoffen hergestellt wird.

Es besteht ausserdem die Option, dieses Portionskissen mit einer unsichtbaren sowie mit mindestens einem der verwendeten Werkstoffe fest verbundenen, optischen oder elektromagnetischen Kennzeichnung zu versehen, um über eine Sensorfunktionseinheit berührungslos den Typ dieses Portionskissens elektronisch erkennen zu können, damit das Extraktionsgerät mit dieser Information vollautomatisch die optimale Extraktionsprozedur aktivieren kann. Diese unsichtbare, fälschungssichere Markierung dient sowohl dem Markenschutz als auch der kundenspezifischen Kennzeichnung für Grossabnehmer zu Spezialkonditionen wie zum Beispiel Luftfahrtgesellschaften oder Restaurantketten.

## Beschreibung

Die vorliegende Erfindung betrifft ein vollständig biologisch abbaubares, ausschliesslich aus kompostierbaren oder biotechnologisch verwertbaren Werkstoffen hergestelltes, aromadichtes, sauerstoffundurchlässiges Portionskissen, das aus zwei identisch geformten und mit breitem, abgeflachten Rand versehenen Folienschalen besteht, die entweder aus einem mehrschichtigen Biokunststofffolien-Verbund oder anderen Bioverbundwerkstoffkombinationen hergestellt, flexibel ausgeführt und spiegelsymmetrisch an ihrem abgeflachten, breiten Rand miteinander druckdicht verbunden sind, wodurch sie einen aromadichten Hohlraum schaffen, der mit einer oder mehreren zu extrahierenden Substanzen gefüllt ist und so komplettiert für die Zubereitung eines Getränkes in einer Getränkezubereitungsmaschine oder in einem Getränkezubereitungsautomaten unter Zuführung von unter Druck stehendem, heissen Wasser seine Verwendung findet sowie insbesondere das umweltfreundliche Merkmal einer rein biologischen Entsorgungsmöglichkeit aufweist, sodass dieses Portionskissen mit seinem Restinhalt nach Gebrauch durch Kompostierung in seine natürlichen Einzelbestandteile zurückführt und damit höheren Pflanzen als Nährstoff wieder zur Verfügung steht, oder zur Biovergasung oder als Rohstoff zur Gewinnung von Biodiesel Verwendung findet, womit der biologische Kreislauf geschlossen wird, ohne dass dabei die Umwelt belastende Schadstoffe entstehen oder zurückbleiben können sowie ferner kein wertvoller Sekundärrohstoff wie zum Beispiel stromintensiv unter strombedingter Treibhausgasemission hergestelltes Aluminium nach und nach auf Mülldeponien verstreut oder in Müllverbrennungsanlagen vernichtet einem fortlaufenden Rezyklierungs-, Produktions- und Nutzungsprozess auf Dauer verloren geht, wobei dieses vorgenannte Portionskissen zusätzlich eine Vorrichtung enthalten kann, die die Funktion einer unsichtbaren, eindeutigen Markierung erfüllt, welche entweder wie in Patent WO 2008/000461 beschrieben aus einem Lumineszenzstoff-Gemisch oder aus einem glasgekapselten Legierungsfaden von der Dicke eines menschlichen Haares oder aus anderen elektromagnetisch lesbaren Komponenten oder unsichtbaren, optischen Markierungen besteht, die innerhalb eines der verwendeten Verpackungswerkstoffe fest eingebunden oder mittels eines mit dieser optisch bzw. elektromagnetisch lesbaren Vorrichtung hergestellten Mittels an dem Portionskissen In- oder aussenwandig fest angebracht ist und über eine elektronische Sensorfunktionseinheit optisch bzw. elektromagnetisch ausgelesen und elektronisch ausgewertet werden kann.

Was die Formen des Portionskissens im Ganzen und der beiden Folienschalen im Einzelnen betrifft, so ist die Erfindung hierbei nicht auf spezielle Formen beschränkt.

Es ist bekannt, mittels Extraktion unter Zugabe von unter Druck stehendem Heisswasser ein Getränk aus einem Portionskissen herzustellen, das mit einer oder mehreren Substanzen gefüllt ist, wie In den Patentschriften EP 0 422 898, DE 696 16 346, EP 0 844 195, EP 1 130 989, DE 693 09 868, DE 699 09 504, WO 94/01344 und WO 00/28868 beschrieben. Diese Portionskissen bestehen entweder selbst aus einem Kunststoff-Aluminium-Laminat oder benötigen für die Haltbarkeit der Inhaltsstoffe eine zusätzliche, aromadichte Umverpackung aus Kunststoff-Aluminium-Verbundwerkstoffen, wenn die zu extrahierende Substanz in einem atmungsaktiven oder luftdurchlässigen Vliesstoff bzw. Gewebe verpackt ist. Um dieses Portionskissen sowie die anfallenden Umverpackungen nach Gebrauch umweltgerecht aufarbeiten zu können, müssen sie zusammen mit dem Rest der Extraktion vom Endverbraucher separat gesammelt und über eine Rückführungskette zum Hersteller oder zu einem Recycling-Unternehmen gebracht werden. Dies ist für den Kunden sehr umständlich, wobei es zu bezweifeln bleibt, dass sich alle Kunden einem durch den Hersteller angebotenen Recyclingprogramm auf Dauer anschliessen. Derzeit gehen Hersteller solcher Portionskissen von einer umweltgerechten Entsorgung durch Verbrennung zusammen mit dem gewöhnlichen Haushaltsabfall aus, wodurch aus den verwendeten Verpackungswerkstoffen neben Wasser Aluminiumoxid (Al₂O₃) und das Treibhausgas Kohlendioxid (CO₂) entstehen.

Die internationale Patentschrift WO 02/28241 beschreibt ein kodiertes Kaffeebrühpaket, das mit 8 verschiedenen, aussen sichtbar angebrachten, optischen, maschineninterpretierbaren Kennzeichnungen versehen ist, die dazu verwendet werden können, die Extraktionsgeräte automatisch anzuweisen, spezifische Extraktionsprogramme für den jeweils erkannten Brühpakettyp anzuwenden. Diese optischen Kennzeichnungen sind nicht fälschungssicher und daher für den Markenschutz ungeeignet. Gleiches gilt auch für die in DE 101 16 239 und DE 20121494 beschriebenen rotationssymmetrischen Barcodes zur maschinell lesbaren Kennzeichnung von Portionseinheiten.

In Anbetracht der vorgenannten Nachteile besteht ein Ziel dieser Erfindung darin, ein zeitgemäss umweltfreundliches Portionskissen gefüllt mit einer oder mehreren Substanzen zur Herstellung eines Getränkes zu realisieren, das keine zusätzliche Umverpackung erfordert und nach erfolgtem Extraktionsvorgang samt seinem Restinhalt ausschließlich auf biologischem Weg mittels Kompostierung oder anderer umweltfreundlicher Verfahren vollständig in seine natürlichen Einzelbestandteile zurückgeführt wird, ohne dass dabei die Umwelt belastende Schadstoffe entstehen oder zurückbleiben können sowie ferner ohne wertvolle Sekundärrohstoffe wie das in der Verpackungsindustrie am häufigsten zur Anwendung kommende Aluminium zu verwenden.

Ein weiteres Ziel dieser Erfindung besteht darin, die unter Absatz [0005] beschriebenen kompostierbaren oder biologisch abbaubaren Werkstoffe aus der Gruppe biologisch erzeugter Werkstoffe auszuwählen, da diese weitgehend CO₂-neutral sind. Diese Gruppe der bio-basierten Werkstoffe umfasst Biokunststoffe und Biokunststoff-Verbundwerkstoffe, die aus von Mikroorganismen erzeugten und/oder nachwachsenden Rohstoffen bestehen. Es ist ein Anliegen dieser Erfindung, die Verwendung von biologisch abbaubaren, Erdöl-basierten Werkstoffen soweit als möglich einzuschränken, da Erdöl wegen dessen zunehmender Verknappung und seines steigenden Preises nicht mehr als zeitgemässe Rohstoffquelle anzusehen ist, und weil Erdöl-basierte Werkstoffe die CO₂-Bilanz der Erfindung verschlechtern würde.

Ein Ziel dieser Erfindung ist es ferner, das vorgenannte Portionskissen mit einer benutzerfreundlichen, lebensmittelsicheren, unsichtbaren und optisch bzw. elektromagnetisch lesbaren Markierung zu versehen, wodurch das Extraktionsgerät vollautomatisch den Typ des Portionskissens erkennt und dementsprechend das für diesen Typ vorgegebene Extraktionsablaufprogramm aktiviert, um so ein optimal zubereitetes Getränk zu erhalten.
Diese unsichtbare, fälschungssichere Markierung kann sowohl einen gewünschten Markenschutz als auch eine kundenspezifische Kennzeichnung für Grossabnehmer zu Spezialkonditiorien wie zum Beispiel Luftfahrtgesellschaften oder Restaurantketten realisieren.

## Patentansprüche

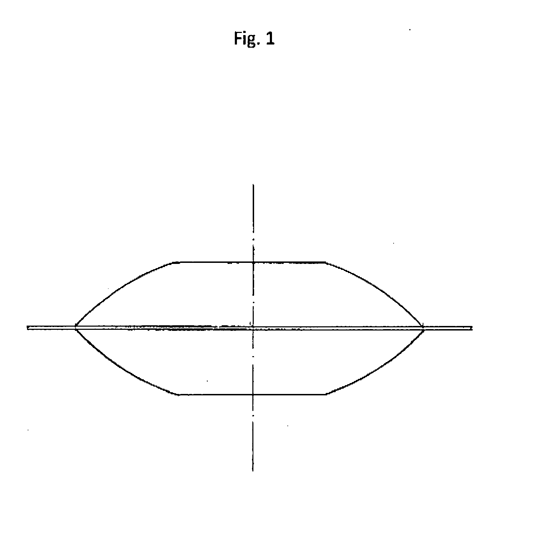

1. Geschlossenes, aromadichtes, sauerstoffundurchlässiges Portionskissen (Fig. 1), das aus zwei identisch geformten und mit breitem, abgeflachten Rand versehenen Folienschalen besteht, die entweder aus einer nichtkunststoffbeschichteten und/oder metallisierten Biokunststofffolie, oder aus einem mehrlagigen Biokunststoff-Folienverbund, der eine oder mehrere nichtkunststoffgeartete Beschichtungen bzw. Metallisierungen eines dieser Typen oder in Kombination beider Typen enthalten kann, oder aus einem Papier/Biokunststoff- bzw. einem Zellulose/Biokunststoff-Verbundwerkstoff mit oder ohne nichtkunststoffgeartete Beschichtung und/oder Metallisierung hergestellt, flexibel ausgeführt und spiegelsymmetrisch an ihrem abgeflachten, breiten Rand miteinander druckdicht verbunden sind, wodurch sie einen aromadichten Hohlraum schaffen, der mit einer oder mehreren zu extrahierenden Substanzen gefüllt ist und so komplettiert für die Zubereitung eines Getränkes oder eines flüssigen Nahrungsmittels in einer Getränkezubereitungsmaschine oder in einem Getränkezubereitungsautomaten unter Zuführung von unter Druck stehendem, heissen Wasser seine Verwendung findet, **dadurch gekennzeichnet, dass** dieses Portionskissen ausschliesslich aus kompostierbaren oder anderweitig umweltfreundlich verwertbaren Werkstoffen hergestellt und zusammen mit seinem Inhalt sowohl vor als auch nach Gebrauch vollständig biologisch abbaubar ist, wobei es durch Kompostierung, Biovergasung, Bioverdieselung oder andere umweltfreundliche Verfahren in seine natürlichen Einzelbestandteile zurückführt und damit zum Beispiel höheren Pflanzen als Nährstoff wieder zur Verfügung steht oder in Form von Biogas oder Biodiesel als ökologischer Energieträger nutzbar ist, womit der biologische Kreislauf geschlossen wird, ohne dass dabei die Umwelt belastende Schadstoffe entstehen oder zurückbleiben können sowie ferner kein wertvoller Sekundärrohstoff wie zum Beispiel stromintensiv unter strombedingter Treibhausgasemission hergestelltes Aluminium in grossen Mengen nach und nach auf Mülldeponien verstreut oder in Müllverbrennungsanlagen vernichtet einem fortlaufenden Recycling-, Produktions- und Nutzungsprozess auf Dauer verloren geht.

2. Portionskissen nach Anspruch 1, **dadurch gekennzeichnet, dass** diese Erfindung betreffend die Formen sowohl des Portionskissens im Ganzen als auch der beiden Folienschalen im Einzelnen nicht auf spezielle Formen beschränkt sind.

3. Portionskissen nach Anspruch 1 und 2, **dadurch gekennzeichnet, dass** dieses Portionskissen in beiden möglichen Strömungsrichtungen senkrecht zur Verbindungsebene beider Folienschalen mittels der unter Druck stehenden, heissen Extraktionsflüssigkeit extrahiert werden kann.

4. Portionskissen nach Anspruch 1, 2 und 3, **dadurch gekennzeichnet, dass** die in diesem Portionskissen zu extrahierende Substanz für die Cremabildung eine Vorpressung bzw. Verdichtung aufweist.

5. Portionskissen nach Anspruch 1, 2, 3 und 4, **dadurch gekennzeichnet, dass** dieses Portionskissen zum Aromaschutz neben der zu extrahierenden Substanz anstatt der Luft ein Schutzgas enthalten kann.

6. Geschlossenes Portionskissen (auch Portionspad oder Portionspouch genannt), nach mindestens einem der vorangegangenen Ansprüche, **dadurch gekennzeichnet, dass** dieses Portionskissen eine zusätzliche Vorrichtung enthält, die die Funktion einer für das menschliche Auge unsichtbaren, eindeutigen Markierung erfüllt, entweder aus einem Lumineszenzstoff-Gemisch oder aber aus einem glasgekapselten Legierungsfaden von der Dicke eines menschlichen Haares oder aus anderen elektromagnetisch lesbaren Komponenten oder unsichtbaren, optischen Markierungen besteht, welche innerhalb mindestens eines verwendeten Verpackungswerkstoffes fest eingebunden oder mittels eines speziell mit dieser optisch bzw. elektromagnetisch lesbaren Vorrichtung hergestellten Mittels an diesem Portionskissen in- oder aussenwandig fest angebracht ist und hierfür vorzugsweise das in Patent WO 2008/000461 beschriebene und im Infrarotbereich optisch auswertbare Warensicherungssystem der Deutschen Firma Swiss Authentication GmbH oder das elektromagnetisch lesbare Warensicherungssystem lockfor^{®} der Schweizer Firma Selicor GmbH zum Einsatz kommt.

7. Portionskissen nach Anspruch 6, **dadurch gekennzeichnet, dass** diese zusätzliche Vorrichtung über eine elektronische Sensorfunktionseinheit optisch oder elektromagnetisch ausgelesen und derart ausgewertet wird, dass ein mit dieser elektronischen Sensorfunktionseinheit ausgestattetes Extraktionsgerät vollautomatisch den Typ des Portionskissens erkennt und dementsprechend das für diesen Typ vorgegebene Extraktionsablaufprogramm aktiviert, um so ein optimal zubereitetes Getränk zu erhalten, oder aber bei gänzlichem Fehlen dieses Auswertesignales aufgrund der Verwendung von markenfremden No-Name-Portionskissen ohne diese unsichtbare, zusätzliche Vorrichtung das Extraktionsgerät aus Markenschutzgründen die Getränkequalität gezielt beeinträchtigen kann.
